# EUROPEAN PATENT APPLICATION

(11) **EP 3 696 562 A1**
(43) Date of publication of application: **19.08.2020**
(21) Application number: 19157153.8
(22) Date of filing: 14.02.2019
(51) Int. Cl.: G01S 5/02

(54) **METHODS AND APPARATUSES FOR THE GENERATION OF DYNAMIC REFERENCE POINTS**

(71) Applicant: Fraunhofer Gesellschaft zur Förderung der angewandten Forschung e.V., 80686 München (DE)
(72) Inventor: Meyer, Steffen, 91154 Roth (DE); Vaupel, Thorsten, 90478 NÜRNBERG (DE); Alawieh, Mohammad, 90443 NÜRNBERG (DE); Perner, Bastian, 91058 ERLANGEN (DE); Hupp, Jürgen, 90425 NÜRNBERG (DE)
(74) Representative: Groth & Co. KB

(57) **Abstract**

The embodiments herein relate to method performed by a radio network node, a network node, a method performed by a UE, a UE, a method performed by a location server and allocation server. The method performed by the network node includes: (501) transmitting at least one signal to other network nodes; (502) detecting signals transmitted from said other network nodes; (503) measuring the signal strength of each received signal; (504) transforming said measured signal strengths into a reference point or into measurement data; and (505) transferring or transmitting the reference point or the measurement data to a location entity or a location node or a location server in the network.

## Description

### TECHNICAL FIELD

The present disclosure relates to the field of wireless communications, and in particular to methods and apparatuses in the form of network node, a UE and a location server for the generation of dynamic reference points for the purpose of determining location or position of a user equipment in a network.

### BACKGROUND

Fingerprinting is a pattern recognition technique where current measurements are compared with reference measurements at known locations. Various types of measurements and signals may be used (e. g. Round Trip Time - RTT, Angle of Arrival - AoA, Magnetic Fields etc.). The most common measurement that is used in the Received Signal Strength (RSS).

A database of reference measurements includes discreet reference points. Each of said reference point holds the measurement values and the location where they were recorded.

In case of RSS a reference point may include the following: Location, Sender identification number (ID) and the type of measurement which in this example is RSS (see table below):

**Table 1: Reference Point**

| Location | Sender ID | Measurement (RSS) |
|---|---|---|
| Location of the Measurements in e.g. Cartesian Coordinates or Global/Polar Coordinates | <id 1> | -60 dBm |
| | <id 2> | -80 dBm |
| | <id 3> | -44 dBm |
| | ... | .. |

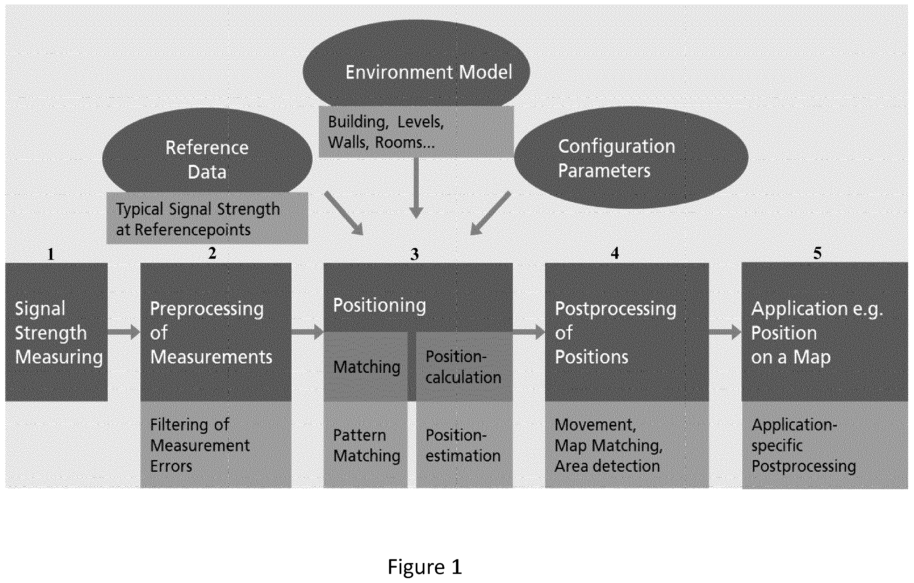

Locating based on Fingerprinting follows five steps as shown in **Figure 1**.
1. Capturing the Measurements
2. Preprocessing the Measurements
3. Positioning, including:
   a. Matching: Selecting Reference Points similar to the Measurements
   b. Position Calculation: Calculating a Position out of the selected Reference Points
4. Post Processing the Position
5. Passing the Position to the Application.

Figure 1 is self-explanatory.

Fingerprinting relies on reference data that has to be either captured in the real environment or pre-calculated using e.g. propagation models. However the strength of the approach is that Fingerprinting is able to deal with and even benefit from inhomogeneous signal propagation typical for indoor environment.

Signal propagation indoors is challenging to model, so a usual approach is to gather reference data by recording it in place, consuming time and effort.

There is therefore a need to reduce the effort of gathering reference data as this is crucial to realize this approach in large areas or even nationwide.

### SUMMARY

According to exemplary embodiments herein, the basic idea is to use stationary base stations to take fingerprinting measurements. Each base station (gNB) measures the received signal strengths related to all surrounding base stations. The measurements of one base station are used to form a single reference point (comprising e.g. the data shown in Table 1). Therefore, the number and placement of reference points is identical with the number and placement of base stations.

It is thus an object of embodiments herein to provide methods and apparatuses for the generation of dynamic reference points for positioning/locating using enhanced fingerprinting.

According to an aspect of embodiments herein, there is a provided a method performed by a network node (e.g. a radio base station or gNB), the method comprising: transmitting at least one signal to other network nodes; detecting signals transmitted from said other network nodes; measuring the signal strength of each received signal; transforming said measured signal strengths into a reference point or into measurement data; and transferring or transmitting the reference point or the measurement data to a location entity or a location node or a location server in the network.

According to another aspect of embodiments herein, there is provided a method performed by a location server or a location entity in a communications network comprising at least said location entity and at least one network node, gNB, the method comprising: receiving a reference point or measurement data from each network node; receiving additional measurement data from at least one UE; generating fingerprinting reference data based on said received reference point, and determining the location or position of the UE;

According to another aspect of embodiments herein, there is provided a method performed by a User Equipment (UE) in a communications network comprising at least one location entity or location server and at least one network node, gNB, the method comprising: receiving, signal strength measurements from at least one network node, gNB; receiving at least one reference point or measurement data from a location server or a location entity; generating fingerprinting reference data based on said received reference point, and determining the location or position of the UE.

According to another aspect of embodiments herein, there is also provided an apparatus in the form of a (radio) network node (or gNB), the network node comprising a processor and a memory, said memory containing instructions executable by said processor whereby said network node is operative to perform any one of the subject matter of method claims 1-2.

There is also provided a computer program comprising instructions which when executed on at least one processor of the network node according to claim 7, cause tat least said one processor to carry out the method according to anyone of claim 1-2.

There is also provided a carrier containing the computer program, wherein the carrier is one of a computer readable storage medium; an electronic signal, optical signal or a radio signal.

There is also provided a location server or location entity in a communications network comprising at least said location entity and at least one network node, gNB, and at least one additional network node, the location server comprising a processor and a memory, said memory containing instructions executable by said processor whereby said location server is operative to perform any one of the subject matter of method claims 3-5.

There is also provided a computer program comprising instructions which when executed on at least one processor of the location server according to claim 8, cause tat least said one processor to carry out the method according to anyone of claims 3-5.

There is also provided a carrier containing the computer program, wherein the carrier is one of a computer readable storage medium; an electronic signal, optical signal or a radio signal.

There is also provided a user equipment, UE, in a communications network comprising at least one location entity or location server and at least one network node, gNB, the UE comprising a processor and a memory, said memory containing instructions executable by said processor whereby said UE is operative to perform the subject matter of method claim 6.

There is also provided a computer program comprising instructions which when executed on at least one processor of the UE according to claim 9, cause tat least said one processor to carry out the method according to claim 6.

There is also provided a carrier containing the computer program, wherein the carrier is one of a computer readable storage medium; an electronic signal, optical signal or a radio signal.

Several advantages and benefits are provided by the embodiments herein and which may be summarized as follow:
Without the need of a manual calibration of the area, the advantages of a fingerprinting method (esp. indoors) may be used for positioning. This enables the use of fingerprinting in large areas without calibration effort.

Having stable base stations taking measurements, it is possible to gather that data continuously over time. One can not only provide updates of the database on a regularly base but also on changes. One can even set-up timed profiled reference data. Changing environments (industry areas, crowded areas as airports, fairgrounds etc.) benefit from dynamically gathered reference data.

In mobile communication systems (e.g. in 4G or 5G) it is crucial to reduce the efforts for the calibration of fingerprinting systems. The suggested method can eliminate the manual efforts completely. Hence it is possible to transfer the vice-versa measurements to generate the received signal strength map.

### BRIEF DESCRIPTION OF THE DRAWINGS

Examples of embodiments and advantages of the embodiments herein are described in more detail with reference to attached drawings in which:
Figure 1 depicts an example of locating based on fingerprinting according to the prior art.
Figure 2 depicts an example of locating based on fingerprinting according to some exemplary embodiments herein (UE-assisted)
Figure 3 depicts an example of locating based on fingerprinting according to some exemplary embodiments herein (UE-based).
Figure 4 depicts an example of locating based on fingerprinting according to some exemplary embodiments herein (UL (UpLink) central)).
Figure 5 illustrates a flowchart of a method performed by a network node according to some exemplary embodiments herein.

### DETAILED DESCRIPTION

In the following, is presented a detailed description of the exemplary embodiments in conjunction with the drawings, in several scenarios, to enable easier understanding of the solution(s) described herein.

As mentioned earlier, the basic idea, provided by the exemplary embodiments herein, is to use stationary base stations or radio network nodes or gNBs to take fingerprinting measurements. Each base station (gNB or network node) is configured to measure the received signal strengths related to all surrounding base stations (network nodes). The measurements of one base station are used to form a single reference point (comprising e.g. the data shown in Table 1 i.e. Location info; Sender ID and Measurement information (RSS)). Therefore, the number and placement of reference points is identical with the number and placement of base stations.

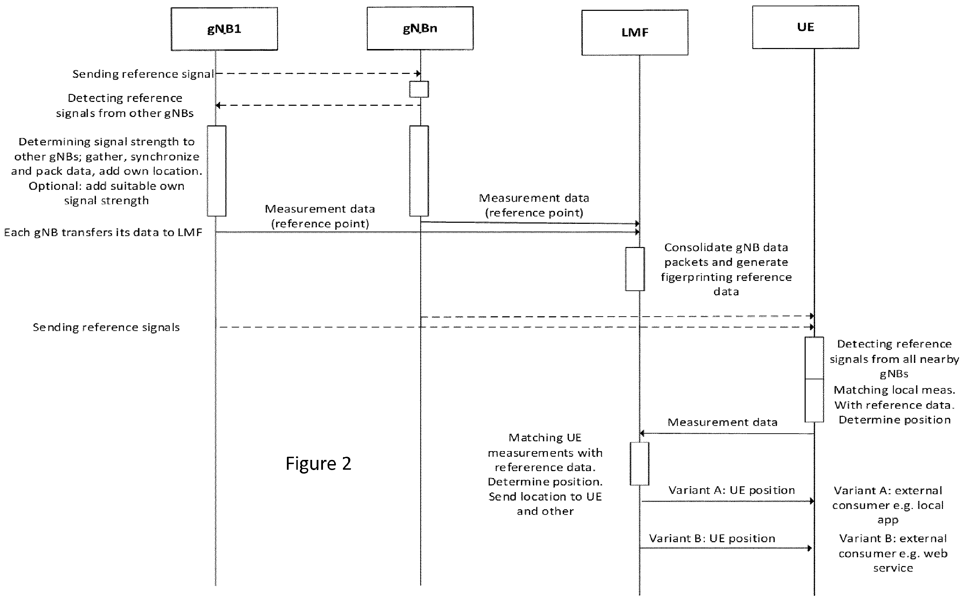

Referring to **Figure 2** there is shown positioning or locating based on fingerprinting according to some exemplary embodiments herein (UE-assisted), UE stands for User Equipment). In the following, Fingerprinting according to the embodiments herein is called enhanced Fingerprinting or Fingerprinting++ to clearly differentiate from Fingerprinting according to prior art.

As shown in Figure 2, each gNB is configured to send signal to surrounding base stations. This signal could be a reference signal, a broadcast signal or any suitable signal that is unique to the base station. Hereinafter such a signal is exemplified as a reference signal to be consistent with drawings. An exchange of these reference signals is performed between the base stations. Each gNB is configured to perform measurements on the detected reference signals to determine the signal strength of each received reference signal. Each gNB is further configured to transform the signal strengths into a reference point (or measurement data). Hence one reference point per gNB. Each gNB is further configured to transfer or transmit its measurement data or reference point to an entity or a node in the network. An example of such entity or server is the LMF (Location Measurement Function) as shown in Figure 2.

As shown, reference signals from each gNB are also received by a UE and the UE is configured to perform signal strength measurements on the detected reference signals. The UE is further configured to transmit these measurements to the entity or LMF or any suitable node which performs the enhanced Fingerprinting. At the LMF, the LMF uses the reference points and the (UE) measurements from the UE and matches the UE measurements with reference data to determine the location or position of the UE and then send this information to the UE. The LMF may also send the position or location information to additional nodes e.g. to the other gNBs. As an example, the UE position determined by the LMF may be sent to an external consumer e.g. a local application residing in the UE and/or to, for example, a web service in the UE.

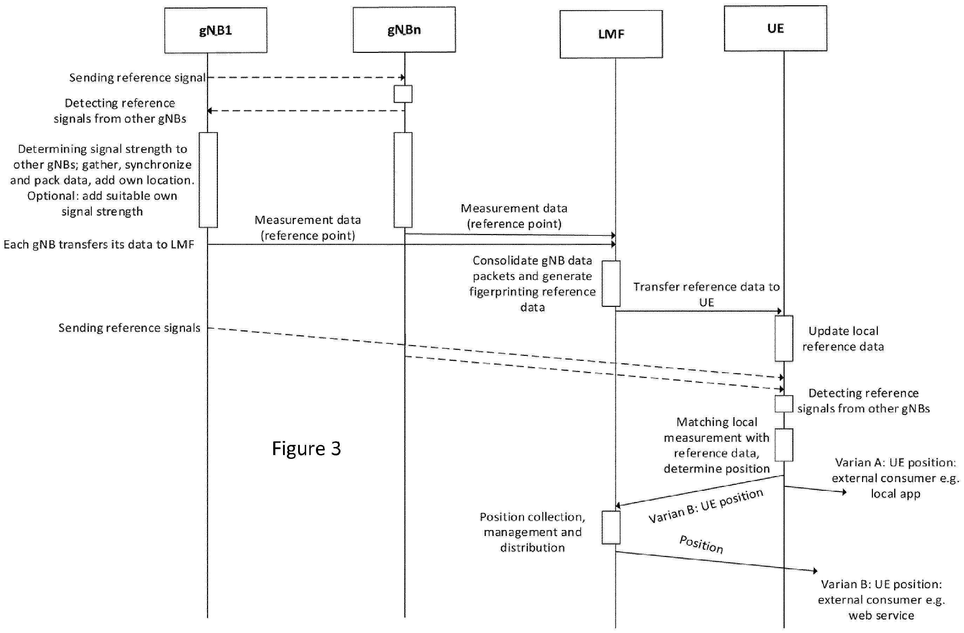

Referring to **Figure 3** there is shown positioning or locating based on fingerprinting according to some exemplary embodiments herein (UE-based). In this scenario, the position or location of the UE is performed by the UE itself based on information received from the LMF and also based on the reference signals detected at the UE, which signals are sent from gNBs.

Hence, after exchanging reference signals between base stations (gNB1 and gNB2) the recorded signal strength is transformed into a reference point (one for gNB1, one for gNB2) and the reference points are transferred to a Location Server (e.g. LMF). From there it is handed on or sent to the UE which treats it as reference data. The UE is configured to collect signal strength information of all surrounding gNBs and performs fingerprinting as shown in Figure 3.

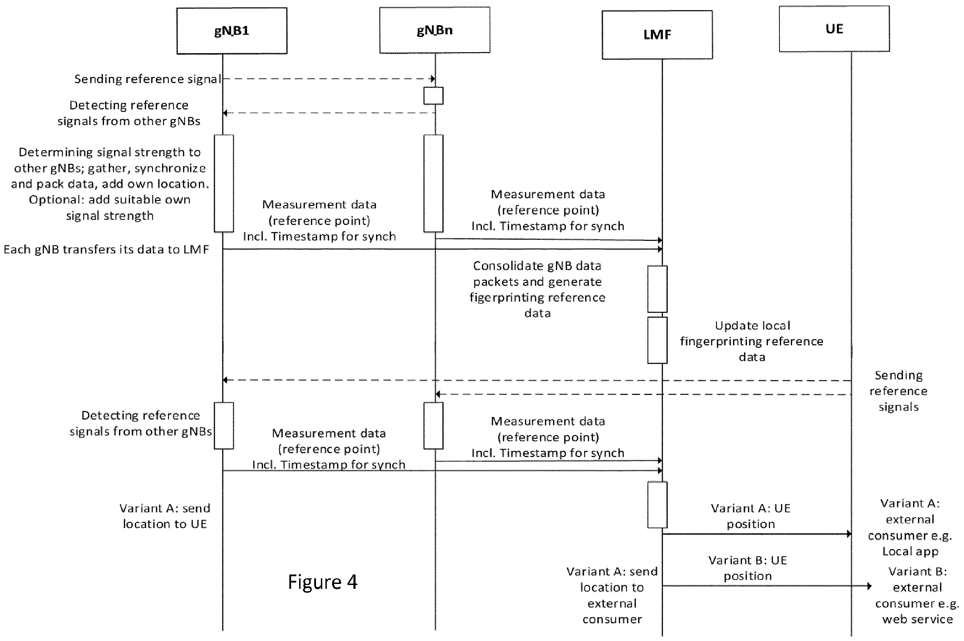

Here the UE gathers the signal strength measurements and performs the fingerprinting on reference points provided by the LMF itself. Other variants are UE-assisted fingerprinting (UE gathers the signal strength measurements, transmits them to the LMF which performs the fingerprinting as shown in Figure 2) or Uplink-based (UL-based) central fingerprinting (UE is configured to send out signal to each gNB and each gNB is configured to perform signal strength measurements and is further configured to transmit the measurements to the LMF that performs the fingerprinting, as shown in **Figure 4****.**

It should be mentioned that that the density of reference points (i.d. the distance between reference points) in a resulting database may be lower than manually entered ones therefore optimized matching and position calculation algorithms maybe applied.

Common reference data are comprised of the received signal strength at a certain position individually for each surrounding base station. Using the base stations itself as a measurement device their own received signal strength value is missing in the data set. The following strategies are suitable to complete the date that a mobile device or UE can compare their measurement data directly with the reference data build by the base stations.
A) No received signal strength value is stored in the reference data for the capturing base stations. The reference data contains an annotation for the base station's identifier. In the matching phase, the mobile device or UE can treat this entry in a special way, not to falsify the expectations e.g. by skipping this entry completely.
B) The id-rss-tupel for the capturing base station will be filled with a synthetic received signal strength value. The value itself depends on the base station's characteristics like transmission power and antenna pattern.
C) Use a combination A) and B) by an annotation of the synthetic value. This also allows a special treatment in the matching phase, but there is no cut of information.

Benefits of the embodiments herein may be summarized as follow:
Without the need of a manual calibration of the area, the advantages of a fingerprinting method (esp. indoors) may be used for positioning. This enables the use of fingerprinting in large areas without calibration effort.

Having stable base stations taking measurements, it is possible to gather that data continuously over time. One can not only provide updates of the database on a regularly base but also on changes. One can even set-up timed profiled reference data. Changing environments (industry areas, crowded areas as airports, fairgrounds etc.) benefit from dynamically gathered reference data.

In mobile communication systems (e.g. in 4G or 5G) it is crucial to reduce the efforts for the calibration of fingerprinting systems. The suggested method can eliminate the manual efforts completely. Hence it is possible to transfer the vice-versa measurements to generate the received signal strength map.

Having a self-calibrating network it is possible to have reference point densities in a typical range for room centric positioning quality. Probably an aimed error of 10 m @ 80 % is achievable.

As previously mentioned, the basic idea is to use stationary base stations to take fingerprinting measurements. Each base station (gNB) measures the received signal strengths related to all surrounding base stations. The measurements of one base station are used to form a single reference point (comprising e.g. the data shown in Table 1). Therefore, the number and placement of reference points is identical with the number and placement of base stations.

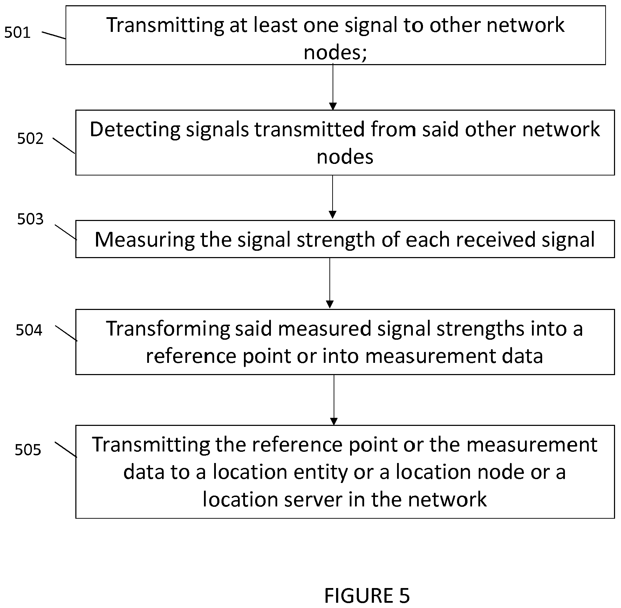

Referring to **Figure 5**, there is illustrated a flowchart of a method performed by a network node (e.g. a radio base station or gNB), the method comprising:
(501) transmitting at least one signal to other network nodes;
(502) detecting signals transmitted from said other network nodes;
(503) measuring the signal strength of each received signal;
(504) transforming said measured signal strengths into a reference point or into measurement data; and
(505) transferring or transmitting the reference point or the measurement data to a location entity or a location node or a location server in the network.

Additional details on the actions or functions that are performed by the network node have already been presented.

As previously described, there is according to another aspect of embodiments herein, there is provided a method performed by a by a location server or a location entity in a communications network comprising at least said location entity and at least one network node, gNB, the method comprising: receiving a reference point or measurement data from each network node; receiving additional measurement data from at least one UE; generating fingerprinting reference data based on said received reference point, and determining the location or position of the UE.

There is method performed by a User Equipment (UE) in a communications network comprising at least one location entity or location server and at least one network node, gNB, the method comprising: receiving, signal strength measurements from at least one network node, gNB; receiving at least one reference point or measurement data from a location server or a location entity; generating fingerprinting reference data based on said received reference point, and determining the location or position of the UE.

According to another aspect of embodiments herein, there is also provided an apparatus in the form of a (radio) network node (or gNB), the network node comprising a processor and a memory, said memory containing instructions executable by said processor whereby said network node is operative to perform any one of the subject matter of method claims 1-2.

There is also provided a computer program comprising instructions which when executed on at least one processor of the network node according to claim 7, cause tat least said one processor to carry out the method according to anyone of claim 1-2.
There is also provided a carrier containing the computer program, wherein the carrier is one of a computer readable storage medium; an electronic signal, optical signal or a radio signal.

There is also provided a location server or location entity in a communications network comprising at least said location entity and at least one network node, gNB, and at least one additional network node, the location server comprising a processor and a memory, said memory containing instructions executable by said processor whereby said location server is operative to perform any one of the subject matter of method claims 3-5.

There is also provided a computer program comprising instructions which when executed on at least one processor of the location server according to claim 8, cause tat least said one processor to carry out the method according to anyone of claims 3-5.

There is also provided a carrier containing the computer program, wherein the carrier is one of a computer readable storage medium; an electronic signal, optical signal or a radio signal.

There is also provided a user equipment, UE, in a communications network comprising at least one location entity or location server and at least one network node, gNB, the UE comprising a processor and a memory, said memory containing instructions executable by said processor whereby said UE is operative to perform the subject matter of method claim 6.

There is also provided a computer program comprising instructions which when executed on at least one processor of the UE according to claim 9, cause tat least said one processor to carry out the method according to to claim 6.

There is also provided a carrier containing the computer program, wherein the carrier is one of a computer readable storage medium; an electronic signal, optical signal or a radio signal.

Throughout this disclosure, the word "comprise" or "comprising" has been used in a non-limiting sense, i.e. meaning "consist at least of. Although specific terms may be employed herein, they are used in a generic and descriptive sense only and not for purposes of limitation. The embodiments herein may be applied in any wireless systems including GSM, 3G or WCDMA, LTE or 4G, LTE-A (or LTE-Advanced), 5G, WiMAX, WiFi, Bluetooth, satellite communications, TV broadcasting etc. that may employ Fingerprinting for locating a device or a node or an equipment in a network.

## Claims

1. A method performed by a network node, gNB, in a communications network comprising at least said gNB and at least one additional network node, the method comprising:
- (501) transmitting at least one signal to other network nodes;
- (502) detecting signals transmitted from said other network nodes;
- (503) measuring the signal strength of each received signal;
- (504) transforming said measured signal strengths into a reference point or into measurement data; and
- (505) transferring or transmitting the reference point or the measurement data to a location entity or a location node or a location server in the network.

2. The method according to claim 1 further comprises, sending at least one signal to a User Equipment, and wherein said reference point or measurement data includes location information, sender identity information and measurement information.

3. A method performed by a location server or a location entity in a communications network comprising at least said location entity and at least one network node, gNB, the method comprising:
- receiving a reference point or measurement data from each network node;
- receiving additional measurement data from at least one UE;
- generating fingerprinting reference data based on said received reference point, and
- determining the location or position of the UE;

4. The method according to claim 3 further comprising transmitting said determined location or position to said at least one UE.

5. The method according to claim 3 or claim 4 wherein determining the location of the UE includes matching measurement data received from the UE with the generated reference data.

6. A method performed by a user equipment, UE, in a communications network comprising at least one location entity or location server and at least one network node, gNB, the method comprising:
- receiving, signal strength measurements from at least one network node, gNB;
- receiving at least one reference point or measurement data from a location server or a location entity;
- generating fingerprinting reference data based on said received reference point, and
- determining the location or position of the UE;

7. A network node, gNB, in a communications network comprising at least said gNB and at least one additional network node, the network node comprising a processor and a memory, said memory containing instructions executable by said processor whereby said network node is operative to perform any one of the subject matter of method claims 1-2.

8. A location server or location entity in a communications network comprising at least said location entity and at least one network node, gNB, and at least one additional network node, the location server comprising a processor and a memory, said memory containing instructions executable by said processor whereby said location server is operative to perform any one of the subject matter of method claims 3-5.

9. A user equipment, UE, in a communications network comprising at least one location entity or location server and at least one network node, gNB, the UE comprising a processor and a memory, said memory containing instructions executable by said processor whereby said UE is operative to perform the subject matter of method claim 6.
